# EUROPEAN PATENT SPECIFICATION

(11) **EP 3 180 711 B1**
(45) Date of publication and mention of the grant of the patent: **02.10.2019**
(21) Application number: 15754362.0
(22) Date of filing: 13.08.2015
(51) Int. Cl.: G06F 17/24, G06F 3/0488, G06K 9/22, G06F 3/0354, G06F 3/0484

(54) **DETECTING SELECTION OF DIGITAL INK**
ERKENNUNG DER AUSWAHL EINER DIGITALEN TINTE
DÉTECTION D'UNE SÉLECTION D'ENCRE NUMÉRIQUE

(30) Priority: 15.08.2014 US 201414461299
(43) Date of publication of application: 21.06.2017
(73) Proprietor: Microsoft Technology Licensing, LLC, Redmond, WA 98052-6399 (US)
(72) Inventor: MARKIEWICZ, Jan-Kristian, Redmond Washington 98052-6399 (US)
(74) Representative: Goddar, Heinz J.
(86) International application number: PCT/US2015/044939
(87) International publication number: WO 2016/025659

(56) References cited:
- EP-A2- 1 351 123
- US-A- 5 345 543
- US-A- 5 513 309
- US-A- 5 523 775
- US-A- 6 021 218
- US-A- 6 032 163
- US-A1- 2004 021 701
- Apple: "Newton 2.0 User Interface Guidelines", , 31 May 1996 (1996-05-31), XP055295136, ISBN: 978-0-201-48838-8 Retrieved from the Internet: URL:http://www.newted.org/download/manuals /Newton20UIGuide.pdf [retrieved on 2016-08-11]
- Incredible Tutorials: "Adobe Photoshop Tutorial: Lasso Tool", You Tube, 10 November 2009 (2009-11-10), pages 1-3, XP054978093, Retrieved from the Internet: URL:https://www.youtube.com/watch?v=5AqwrA JYf5Q [retrieved on 2018-02-08]

## Description

### BACKGROUND

Conventionally, computing devices have sensors to detect digital ink received from a user's finger, pen, or other writing instrument. The computing devices interpret the user's input as digital ink. The digital ink may include one or more handwritten strokes, which a computing device may display as digital ink as the one or more handwritten strokes, pen strokes, and touch strokes are received. The strokes may begin when a writing instrument (e.g., hand, pen, etc.) lands on a digital-ink enabled surface of the computing devices. The strokes end when the writing instrument is lifted off the digital-ink enabled surface.

The digital ink-enabled surface may include a display screen. The display screen may further include a digitizer that senses the strokes received as user input. The writing instrument may be an electronic pen; non-electronic pen; a stylus; a user's own finger; a pointing device, such as, for example, a computer mouse; or another writing instrument.

Conventional selection occurs through mode changes. The mode changes may occur through writing instrument hardware or graphical updates on the display. A hardware mode switch of the writing instrument may change modes from digital ink input to digital ink selection. The hardware mode switch may occur in response to depressing a hardware button on the writing instrument, flipping the writing instrument, or depressing a hardware button on the computing device. Selection may typically occur by holding the button down while engaging the writing instrument with the computing device. After the hardware mode switch, the received strokes are interpreted as selection input as opposed to digital ink input. The hardware button requires additional hardware on the computing device. In some cases, the hardware buttons are prone to inadvertent actuations.

Additionally, in some conventional computing devices, a graphical update may include a mode switch from digital ink input to digital ink selection. The graphical user interface displayed on the computing device may include a graphical button that when selected switches from input mode to select mode. The button may be selected by the writing instrument to move from digital ink input mode to digital ink selection mode. In the digital ink selection mode, instead of creating strokes, the writing instrument interaction with the computing device performs selection. The downside of this graphical update is that it requires extra user interface elements for switching modes. Also, the user is required to periodically switch between digital ink input mode and digital ink selection mode.

US 5 523 775 A describes a technique for selecting objects on a computer display. A stylus is moved on a path across at least a portion of an object depicted on the screen. A line image is created on the screen along the path. At least a portion of the object is selected as indicated by the path. A visual depiction of the selection is created on the screen. A further technique includes detecting a user's intention to enter the selection mode. This intention is manifested in the form of a gesture made by the stylus on the screen. Such gesture can comprise drawing a small circle within a predetermined period of time.

EP 1 351 123 A2 describes a technique for gestural interpretation. A user input gesture is received. It is determined whether said gesture is a selection operation, a draw operation, or an ambiguous operation. Said draw operation is rendered as a permanent mark. Said selection operation is serviced accordingly. In case of said ambiguous operation, the user is presented with a choice for interpreting.

US 6,032,163 A describes a technique for reformatting alphanumeric objects displayed on a screen of a pen computer system. An according method includes the steps of: (a) selecting a plurality of objects to be reformatted; (b) removing object breaks from between the objects; and (c) reformatting the objects without the removed object breaks. A paragraph can be selected by pressing the tip of a stylus against the screen such as at a point until the ink on the screen goes into a "highlighter" mode. When in the highlighter mode, the paragraph is encircled by the ink to indicate selection and a bounding box is placed around the selection.

Apple Press, "Newton 2.0 User Interface Guidelines" describes the Newton interface which enables user input of handwritten text and shapes. Text and shape objects can also be selected for manipulation. To select an object, a user holds down a pen on or near the object until a heavy mark appears. Then the user draws the highlighting mark over or around the object. The user can select text and/or shapes by circling them with the highlighting mark. The Newton system puts a gray selection box around the object or objects the user circled. A user can extend a selection or select more objects by drawing additional highlighting marks. Anything that is selected remains selected when the user selects more. Objects that the user has not selected may appear within the borders of the gray selection box, but only the selected objects are highlighted.

Incredible Tutorials: "Adobe Photoshop Tutorial: Lasso Tool" (YouTube video) is a Photoshop tutorial showing how to do a freehand selection with the Lasso Tool.

### SUMMARY

The invention is defined by the independent claims. Further aspects of the invention are outlined in the dependent claims. Embodiments which do not fall within the scope of the claims do not describe part of the present invention.

Aspects of embodiments of the invention relate to image processing and information manipulation. More specifically, aspects of the embodiments of the invention relate to receiving and handling digital ink information.

Embodiments of the invention relate to systems, devices, methods, and computer-readable media for, among other things, switching between digital ink selection mode and digital ink writing mode. The devices with digital ink-enabled surfaces are configured to enter the digital ink selection mode in response to a specified digital ink shape received on the digital ink-enabled surface. While in digital ink selection mode, a user may perform one or more commands on digital ink strokes that are detected within the specified digital ink shape. In one embodiment, the digital ink shape may be a circle, star, box, or any other closed shape.

In other embodiments, a computing device may execute a method for detecting digital ink selection. The computing device receives digital ink on an ink-enabled surface of the computing device. In turn, the computing device determines whether the received digital ink is a closed shape. When the received digital ink is a closed shape, the computing device performs the following: detects digital ink strokes within the closed shape and enters into a semi-selection mode in response to the digital ink strokes detected in the closed shape digital ink. In turn, the computing device selects the detected digital ink strokes based on subsequent user actions on the computing device. In at least one embodiment, the received digital ink is displayed on the ink-enabled surface. Alternatively, in other embodiments, the digital ink may be displayed on a monitor that is separate from the ink-enabled surface.

In some embodiments, the computing device is configured to switch between a digital ink selection mode and another mode (e.g., touch manipulation mode or digital ink writing mode). The computing device comprises a digital ink-enabled surface having sensors to identify tap gestures or writing instrument strokes. In turn, the computing device transmits the identified action to a processor. The processor is configured to receive the identified actions from the digital ink-enabled surface. In response to the tap gesture, the computing device processes the area associated with the tap to detect digital ink strokes. A recognition analysis is executed by the device on the digital ink strokes to recognize a word, sentence, or shape corresponding to the tapped area. The computing device switches from a first mode (e.g., touch manipulation or an ink writing mode) and enters in to a digital ink selection mode for the located ink strokes. In turn, the digital ink-enabled surface is updated to display a closed shape around the located digital ink strokes.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The embodiments of the invention are described in detail below with reference to the attached drawing figures, wherein:
FIG. 1 is a block diagram illustrating an exemplary digital ink-enabled computing environment suitable for implementing embodiments of the invention;
FIG. 2 is a network diagram illustrating a network environment suitable for implementing embodiments of the invention;
FIG. 3 is a logic diagram illustrating a computer-implemented method of detecting selection of digital ink, in accordance with embodiments of the invention;
FIG. 4 is another logic diagram illustrating a computer-implemented method of selecting digital ink, in accordance with embodiments of the invention;
FIG. 5 is a screenshot illustrating an exemplary graphical user interface for receiving digital ink, in accordance with embodiments of the invention;
FIG. 6 is a screenshot illustrating another exemplary graphical user interface for selecting the received digital ink, in accordance with embodiments of the invention;
FIG. 7 is a screenshot illustrating an exemplary command box for the selected digital ink, in accordance with embodiments of the invention;
FIG. 8 is a screenshot illustrating an exemplary selection of digital ink, in accordance with embodiments of the invention; and
FIG. 9 is a screenshot illustrating an exemplary selection modification for the selected digital ink, in accordance with embodiments of the invention.

### DETAILED DESCRIPTION

The subject matter of this patent is described with specificity herein to meet statutory requirements. However, the description itself is not intended to necessarily limit the scope of the claims. Rather, the claimed subject matter might be embodied in other ways to include different steps or combinations of steps similar to the ones described in this document, in conjunction with other present or future technologies. Although the terms "step," "block," or "component," etc., might be used herein to connote different components of methods or systems employed, the terms should not be interpreted as implying any particular order among or between various steps herein disclosed unless and except when the order of individual steps is explicitly described.

As utilized herein, "digital ink" is a sequence or set of strokes with properties. A sequence of strokes may include strokes in an ordered form. The sequence may be ordered by the time captured or by where the strokes appear on a page or in collaborative situations by the author of the ink. Other orders are possible. A set of strokes may include sequences of strokes or unordered strokes or any combination thereof. Further, some properties may be unique to each stroke or point in the stroke (for example, pressure, speed, angle, and the like). These properties may be stored at the stroke or point level, and not at the ink level.

As utilized herein, "point" is information defining a location in space. For example, the points may be defined relative to a capturing space (for example, points on a digitizer), a virtual ink space (the coordinates in a space into which captured ink is placed), and/or display space (the points or pixels of a display device).

As utilized herein, "stroke" is a sequence or set of captured points. For example, when rendered, the sequence of points may be connected with lines. Alternatively, the stroke may be represented as a point and a vector in the direction of the next point. In short, a stroke is intended to encompass any representation of points or segments relating to ink, irrespective of the underlying representation of points and/or what connects the points.

As utilized herein, "writing instrument" is a device for providing strokes corresponding to the digital ink. For example, the writing instruments may include pens, fingers, and pointed objects that are capable of being sensed by the digital ink-enabled surface.

Written texts may convey more information than a series of coordinates connected by line segments. For example, written ink changes to reflect pen pressure (by the thickness of the ink), pen angle (by the shape of the line or curve segments and the behavior of the ink around discreet points), and the speed of the nib of the pen (by the straightness, line width, and line width changes over the course of a line or curve). Processing of these additional properties of ink may reveal emotion, personality, emphasis, and so forth in the written texts that are analyzed.

Digital ink relates to the capture and display of electronic information captured when a user uses a stylus-based input device. Digital ink refers to a sequence or any arbitrary collection of strokes, where each stroke is comprised of a sequence of points. The strokes may have been drawn or collected at the same time or may have been drawn or collected at independent times and locations and for independent reasons. The points may be represented using a variety of known techniques including Cartesian coordinates (X, Y), polar coordinates (r, Θ), and other techniques as known in the art. Digital ink may include representations of properties including pressure, angle, speed, color, stylus size, and ink opacity. Digital ink may further include other properties including the order of how ink was deposited on a page (a raster pattern of left to right then down for most western languages), a time stamp (indicating when the ink was deposited), an indication of the author of the ink, and the originating device (at least one of an identification of a machine upon which the ink was drawn or an identification of the pen used to deposit the ink) among other information.

Embodiments of the invention provide systems for selecting digital ink and detecting selection of the digital ink. A computing device having a digital ink-enabled surface is configured to execute one of at least two digital ink selection and detection computer-implemented methods. The computing device may provide a faster selection of digital ink based on the computer-implemented methods by reducing user interaction with the digital ink-enabled surface.

In one computer-implemented method, a writing instrument may draw a closed digital ink stroke around other digital ink strokes. The computing device may interpret this action as a command to select the ink strokes in the closed digital ink stroke. Upon receiving the closed digital ink stroke, the computing device may render a graphical command box. The command box may include actions like move, copy, delete, color, or convert. A user may interact with one or more actions available in the graphical command box. In at least one embodiment, when the user interacts with the graphical command box, the graphical user interface having the closed digital ink stroke may be updated to remove the closed digital ink stroke. By removing the closed digital ink stroke provided to select the other digital ink strokes, the computing device may reduce the likelihood of accidental interference with additional ink strokes' ink. In other embodiments, if the user ignores the graphical command box, then the closed digital ink stroke is left around the other digital ink strokes. The computing device may interpret the interaction as a writing interaction as opposed to a selection interaction.

In another embodiment, the computing device receives a tap gesture near or on existing digital ink strokes rendered on the digital ink-enabled surface. Tapping on the digital ink stroke may cause the computing device to select the digital ink stroke or a group of digital ink strokes recognized as word, shape, or sentence by the computing device. The selected digital ink stroke may be rendered by the computing device with a closed shape around the digital ink strokes. Upon selection of the digital ink, a command box is rendered on the graphical user interface by the computing device. Additionally, in at least one embodiment, a writing instrument may extend or reduce the size of the closed shape around the digital ink strokes. The computing device may update the digital ink-enabled surface to include more or less ink strokes based on the input received from the writing instrument.

Accordingly, at least two computer-implemented methods are executed by a computing device to select digital ink rendered on a digital ink-enabled surface. Having briefly described an overview of embodiments of the invention, an exemplary operating environment in which embodiments of the invention may be implemented is described below to provide a general context for various aspects of these embodiments.

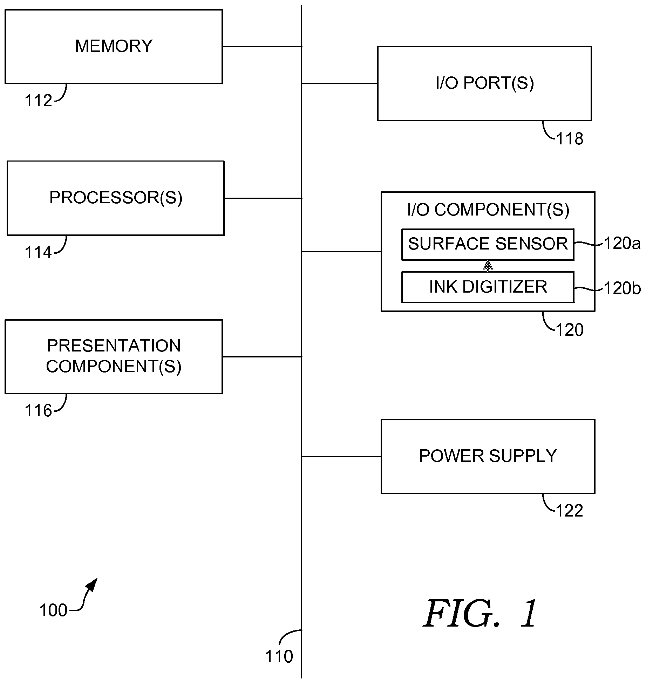

FIG. 1 is a block diagram illustrating an exemplary computing environment suitable for implementing embodiments of the invention. Referring to the figures in general and initially to FIG. 1 in particular and computing device 100 that is configured to selected digital ink rendered by the computing device 100. The computing device 100 is but one example of a suitable computing environment and is not intended to suggest any limitation as to the scope of use or functionality of embodiments of the invention. Neither should the computing device 100 be interpreted as having any dependency or requirement relating to any one component, or combination of components, illustrated.

The embodiments of the invention may be described in the general context of computer code or machine-useable instructions, including computer-executable instructions. These instructions may include program components being executed by a computer or other machine (e.g., a personal data assistant or other handheld device). Generally, program components, including routines, programs, applications, objects, components, data structures, and the like, refer to code that performs particular tasks or implements particular abstract data types. Embodiments of the invention may be practiced in a variety of system configurations, including handheld devices, tablet computers, gaming devices, consumer electronics, general-purpose computers, specialty computing devices, etc. Embodiments of the invention may also be practiced in distributed computing environments or cloud environments, where tasks are performed by remote-processing devices that are linked through a communications network.

As one skilled in the art will appreciate, the computing device 100 may include hardware, firmware, software, or a combination of hardware and software. The hardware includes processors and memories configured to execute instructions stored in the memories. The logic associated with the instructions may be implemented, in whole or in part, directly in hardware logic. For example, and without limitation, illustrative types of hardware logic include field programmable gate array (FPGA), application-specific integrated circuit (ASIC), system-on-a-chip (SOC), or complex programmable logic devices (CPLDs). The hardware logic allows a computing device to generate a graphical user interface that receives digital ink strokes from a user. The device is configured to receive digital ink strokes as input at the graphical user interface. In certain embodiments, the computing device switches between digital ink writing modes and digital ink selection modes. Based on action received from the user, the computing device may select digital ink strokes rendered on an ink-enabled surface. The device may, in an embodiment, display a command box to modify the digital ink strokes.

With continued reference to FIG. 1, computing device 100 includes a bus 110 that directly or indirectly couples the following devices: memory 112, one or more processors 114, one or more presentation components 116, input/output (I/O) ports 118, I/O components 120, and an illustrative power supply 122. Bus 110 represents what may be one or more busses (such as an address bus, data bus, or combination thereof). Although the various blocks of FIG. 1 are shown with lines for the sake of clarity, in reality, delineating various components is not so clear, and metaphorically, the lines would more accurately be grey and fuzzy. For example, one may consider a presentation component, such as a display device, to be an I/O component. Also, processors have memory. The inventors hereof recognize that such is the nature of the art and reiterate that the diagram of FIG. 1 is merely illustrative of an exemplary computing device that can be used in connection with one or more embodiments of the invention. Distinction is not made between such categories as "workstation," "server," "laptop," "handheld device," etc., as all are contemplated within the scope of FIG. 1 and refer to "computer" or "computing device."

Computing device 100 typically includes a variety of computer-readable media. Computer-readable media can be any available media that is accessible by computing device 100 and includes both volatile and nonvolatile media, removable and non-removable media. Computer-readable media may comprise computer storage media and communication media.

Computer storage media includes volatile and nonvolatile, removable and non-removable media implemented in any method or technology for storage of information, such as computer-readable instructions, data structures, program modules, or other data. Computer storage media includes, but is not limited to, Random Access Memory (RAM), Read Only Memory (ROM), Electronically Erasable Programmable Read Only Memory (EEPROM), flash memory or other memory technology, CD-ROM, digital versatile disks (DVDs) or other holographic memory, magnetic cassettes, magnetic tape, magnetic disk storage or other magnetic storage devices, or any other medium that can be used to encode desired data and that can be accessed by the computing device 100. In an embodiment, the computer storage media can be selected from tangible computer storage media like flash memory. These memory technologies can store data momentarily, temporarily, or permanently. Computer storage does not include, and excludes, communication media.

On the other hand, communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media such as acoustic, RF, infrared and other wireless media.

Memory 112 includes computer storage media in the form of volatile and/or nonvolatile memory. The memory may be removable, non-removable, or a combination thereof. Exemplary hardware devices include solid-state memory, hard drives, optical-disc drives, etc. Computing device 100 includes one or more processors that read data from various entities such as memory 112 or I/O components 120. Presentation component(s) 116 present data indications to a user or other device. Exemplary presentation components 116 include a display device, a digital ink-enabled surface, a speaker, a printing component, a vibrating component, etc. I/O ports 118 allow computing device 100 to be logically coupled to other devices including I/O components 120, some of which may be built in. Illustrative I/O components include a microphone, joystick, game pad, satellite dish, scanner, printer, wireless device, controller (such as a writing instrument, stylus, keyboard, and mouse), or natural user interface (NUI), etc. The I/O components 120 may include surface sensor 120a and ink digitizer 120b. The surface sensor 120a receives interaction from the writing instruments. In turn, the sensed interaction information may be digitized for rendering as digital ink by the ink digitizer 120b.

The NUI processes gestures (e.g., hand, face, body, etc.), voice, or other physiological inputs generated by a user. Some of these inputs may be interpreted as digital ink that should be rendered on the digital ink-enable surface. The input of the NUI may be transmitted to the appropriate network elements for further processing. The NUI implements any combination of speech recognition, touch and stylus recognition, facial recognition, biometric recognition, gesture recognition both on screen and adjacent to the screen, air gestures, and head and eye tracking associated with displays on the computing device 100. The computing device 100 may be equipped with depth cameras, such as stereoscopic camera systems, infrared camera systems, RGB camera systems, surface sensors, and combinations of these, for gesture detection and recognition. Additionally, the computing device 100 may be equipped with accelerometers or gyroscopes that enable detection of motion or pressure. The output of the accelerometers or gyroscopes is provided to the memory for storage and processing. Additionally, the output of the accelerometers or gyroscopes is provided to the display of the computing device 100 to render immersive augmented reality or virtual reality.

As previously mentioned, embodiments of the invention are generally directed to systems, methods, and computer-readable storage media for, among other things, switching between digital ink writing mode and digital ink selection mode based on user actions. The graphical user interface is updated with a command box upon switching to digital ink selection mode. The computing device may enter the digital ink selection mode to modify digital ink rendered on the digital ink-enabled surface.

Various aspects of the technology described herein are generally employed in computer systems, computer-implemented methods, and computer-readable storage media for, among other things, detecting digital ink selection and selecting digital ink. In one embodiment, a server executes processing components that detect digital ink selection at the computing device. The server may provide command boxes that specify actions that are available to the selected digital ink on the computing device. The command box is available once the computing device is switched from digital ink writing mode to digital ink selection mode. In one embodiment, the server may log interaction properties (e.g., speed, width, pressure, etc.) associated with the digital ink.

In most embodiments, selecting digital ink does not interfere with normal inking. The computing device may detect selection based on closed shapes or tap gestures received at the digital ink-enabled surface. In one embodiment, the selection of digital ink may be made by drawing a closed ink stroke. Upon receiving the closed ink stroke, the computing device interprets the user's intent as selection or writing based on subsequent user action. The computing device may enter into a semi-selection state upon confirming that digital ink exists within the closed ink stroke or proximate to the area of a tap gesture. Accordingly, the computing device is configured to process the digital ink to, among other things, identify the input of a closed shape digital ink, process a tapped area, and confirm the existence of digital ink within the shape or near the tapped area. Based on processing of received digital ink or the tap gesture, the computing device processes the digital ink shape or tap gesture as writing or as selection.

In one embodiment, a computer system is configured to process gestures and digital ink strokes. The computer system includes, among other components, an application component, storage component, and processing component. The application component may provide a command box user interface to the client device that is processing digital ink selection. The processing component may receive the user input (e.g., digital ink) and determine whether the digital ink is a selection action or writing action based on subsequent input received from the client device. The storage component may store the properties associated with the received digital ink.

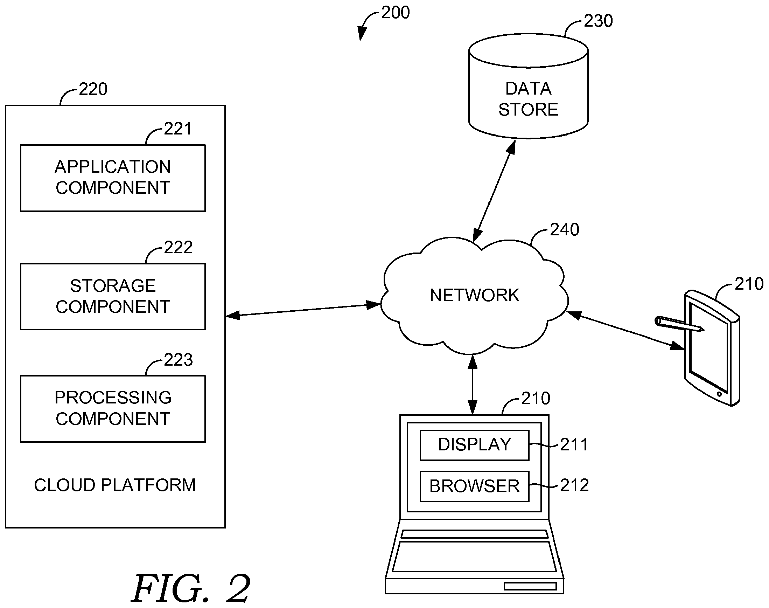

FIG. 2 is a network diagram illustrating a network environment suitable for implementing embodiments of the invention. The computing system 200 may include client devices 210, server 220, data store 230, and network 240. The network 240 may communicatively connect the client devices 210, server 220, and data store 230. It should be understood that any number of client computing devices 210, servers 220, and data stores 230 may be employed in the computing system 200 within the scope of embodiments of the invention. Each may comprise a single device/interface or multiple devices/interfaces cooperating in a distributed environment. For instance, the server 220 may comprise multiple devices and/or modules arranged in a distributed environment or cloud environment that collectively provide the functionality of the server 220 described herein. Additionally, other components/modules not shown also may be included within the computing system 200.

In some embodiments, one or more of the illustrated components/modules may be implemented as stand-alone applications. In other embodiments, one or more of the illustrated components/modules may be implemented via the client devices 210, as an Internet-based service, or as a module inside the server 220. It will be understood by those of ordinary skill in the art that the components/modules illustrated in FIG. 2 are exemplary in nature and in number and should not be construed as limiting. Any number of components/modules may be employed to achieve the desired functionality within the scope of embodiments hereof. Further, components/modules may be located on any number of search engines or user computing devices. By way of example only, the server 220 might be provided as a single server (as shown), a cluster of servers, or a computing device remote from one or more of the remaining components.

The client devices 210 may be used to input digital ink or select digital ink on the digital ink-enabled surface. The client devices 210 may communicate the user input received on the digital ink-enabled surface to the server 220. In an embodiment, the client devices 210 may include any type of computing device, such as the computing device 100 described with reference to FIG. 1, for example.

Generally, the client device 210 includes a display 211 and a browser 212. The display 211 is configured to present content. The display 211 may also be configured with surface sensors and ink digitizers. The surface sensors detect input received from a user on the surface of the display. The digitizer obtains the input and converts the input to digital ink. In one embodiment, the display 211 is further configured to recognize user touch or gesture inputs as digital ink in response to processing performed by an NUI. In at least one embodiment, the display 211 may receive digital ink input via a writing instrument. In turn, the client device 210 may process the input as a selection or as writing ink based on the subsequent user actions. The browser 212 of the client device may be updated to render a graphical user interface having ink modification commands based on whether the client device processes the input as digital ink selection or digital ink writing.

The browser 212 is configured to render the digital ink or any multimedia content, for instance, web pages, video files, audio files, etc., in association with the display 211 of the client computing device 210. The browser 212 is further configured to receive user input for selecting or modifying the rendered digital ink (generally inputted via a graphical user interface or NUI) and to receive multimedia content for presentation on the display 211, for instance, from the data store 230. The browser 212 may be any suitable type of web browser such as INTERNET EXPLORER®, FIREFOX®, CHROME®, SAFARI®, or other type of software configured to enable digital ink selection as described herein. It should be noted that the functionality described herein as being performed by the browser 212 may be performed by any other application capable of rendering multimedia content. Any and all such variations, and any combination thereof, are contemplated to be within the scope of embodiments of the invention.

The server 220 is configured to receive user input from the client devices 210, provide command boxes for digital ink modification, and log digital ink metadata for the digital ink selection or written digital ink. The server may implement any combination of the following components to process the user input: an application component 221, a storage component 222, and a processing component 223. In one embodiment, the components of the server 220 may be executed locally by the client devices 210 to process the digital ink received by the client devices 210.

The application component 221, in one embodiment, receives user input from the client devices 210. The user input may select digital ink or write digital ink. The application component 221 is configured to process the user input based on the subsequent actions received from the client devices 210. In one embodiment, the processing component 223 interprets the user input and notifies the application component 221 that the user input is a selection of digital ink as opposed to writing digital ink. The user input is processed by the processing component 223.

The storage component 222 stores properties associated with the digital ink. The storage component 222 receives the properties of the digital ink from the client devices 210. The properties may identify the application that the user input is directed toward; the speed, pressure, width, and time of user input; whether the user input is recognized as digital ink selection or digital ink writing; etc. These properties are stored in the data store 230. The storage component 222 may store the number of applications that receive the digital ink as user input.

The processing component 223 determines whether the digital ink from the user input is a selection or writing request. In at least one embodiment, the subsequent action is processed by the processing component 223 as an indicator of whether the digital ink is a selection. The processing component 223 provides fast ink selection when the client devices 210 receive user input from a basic capacitive stylus (or finger) without requiring any special hardware to initiate selection mode.

The processing component 223 may determine whether the digital ink stroke is a closed shape (e.g., box, star, circle, etc.). The processing component 223 may identify the closed ink stroke in a flexible manner. For example, if the end-points of a digital ink shape are not touching but fall within a specific maximum distance from each other, the processing component 223 may interpret the user input as a closed stroke. Or if the ink strokes overlap but have end-points far from each other, we also interpret it as a valid closed stroke. Thus, in alternate embodiments, the processing component 223 may determine whether the user input includes overlapping digital ink strokes.

Upon confirming the existence of a closed shape, the content of the closed shape is checked by the processing component 223. When the closed shape contains other digital ink strokes, the processing component 223 may provide one or more command boxes to client device 210 for rendering on the display 211. In turn, the other digital ink strokes are identified as words, sentences, or other shapes within the closed shape digital ink. These identified words, sentences, or other shapes are made available for formatting or modification by the client device 210. The one or more command boxes, in one embodiment, may be a visual cue that the client device 210 is in a semi-selection state.

If the user interacts with the command box to modify the identified words, sentences, or shapes, the closed shape digital ink is processed as selection. The storage component 222 may log the time, application, and shape corresponding to the selection action. When the closed shape is identified as selection, the client device 210 may remove the closed shape from the display 211 when the writing instrument hovers over an action in the command box or after an action is selected from the command box. Accordingly, when the user's next action is to interact with the digital ink selection (either the command box or directly with the selection), the client device 210 may remove the closed digital ink stroke. The closed digital ink stroke is identified as a visual cue to initiate the selection and is removed from the display 211. By removing the closed digital ink stroke, the selection processing provides additional room on the display 211 for the user to draw permanent closed digital ink shapes.

In some embodiments, when the user ignores the command box and continues to enter digital ink on the client device 210, the closed ink strokes are identified as written ink, and the client device 210 moves out of semi-selection mode by removing the command box.

The processing component 223 may determine whether the digital ink from the user input is a selection or writing request based on a touch gesture received at the client devices 210. In this embodiment, a pen or stylus may be configured for digital ink input and a touch gesture (e.g., touch, drag, pinch, etc.) may be used to manipulate the ink-enabled surface.

When the user taps on (or very close to) a digital ink stroke, the processing component 223 may perform ink analysis to determine whether the digital ink stroke is part of a larger ink group (such as a word, sentence, shape, etc.). If the processing component 223 determines that the digital ink stroke is part of a larger digital ink group, then the processing component 223 selects the whole digital ink group. Optionally, the client devices 210 may also render a command box for the selected digital ink group.

When the digital ink stroke is not part of a larger digital ink group, the processing component 223 selects just this digital ink stroke and optionally presents the command box. In turn, the selected digital ink strokes may be manipulated to exclude or include additional ink strokes. The modification of selected ink strokes may be available to the user if the automatic grouping wasn't exactly what the user wanted to select. The selection modification may be performed using the pen or stylus. In one embodiment, a graphical user interface is generated and displayed on the client devices 210 to modify the digital ink selection. The modification graphical user interface is displayed at the selection boundary and is modifiable by way of user input (e.g., pen, stylus, or touch) that drags the boundary to modify (e.g., reduce or extend) the boundaries of selection. In one embodiment, dragging on the selection boundary may either manipulate the selection as a shrinking or growing rectangle around the selected digital ink strokes. Alternatively, a writing instrument may hover on the selection border to cause the client devices 210 to display a dialog that receives selection size parameters.

If a selection is currently made and a touch gesture is directed to another digital ink stroke that is not part of the selection, the processing component 223 may add the other digital ink stroke or replace the ink strokes. The processing component 223 may add the other ink stroke by analyzing the ink strokes associated with the tap gesture and extending the selection to include the previous selection and the new digital ink group that was identified in response to the tap. In some embodiments, the selection boundaries rendered on the display 211 are updated to show extension of the selection. The selection boundaries may include rectangles or other closed shapes that enclose the selected digital ink strokes.

If a selection is currently made and a touch gesture is directed to another digital ink stroke that is not part of the selection, the processing component 223 may replace the ink strokes. The processing component 223 may replace the selected ink stroke by analyzing the ink strokes associated with the tap gesture and creating a selection shape around the new digital ink group that was identified in response to the tap. In some embodiments, the selection boundaries for the previously selected digital ink strokes are removed from the display 211.

In additional embodiments, if a selection is currently made and a touch gesture is directed to white space that is not part of the selection, the processing component 223 may remove all existing ink stroke selections. The processing component 223 may remove the selected ink strokes by removing the selection shapes that surround the digital ink selections. In some embodiments, the selection boundaries for the existing selected digital ink strokes are removed from the display 211.

The data store 230 is accessed by the server 220 to provide metadata for applications that are digital ink enabled. The data store 230, in turn, stores search logs and log data from the user interaction with digital ink-enabled surfaces of the client devices 210. The data store 230 may be a relational database that includes an index to applications, including image, audio, video, text, webpages, etc. The data store 230 may also include a log that tracks statistics (e.g., pressure, speed, width, selection frequency, writing frequency, etc.) for each of the associated multimedia content or applications executed by the application component 221 or the client devices 210. These statistics are provided to the client devices 210 upon request. The stored metadata (e.g., categories and user-supplied tags), in certain embodiments, may be shareable among client devices 210 that are used by the same user to provide context regarding the user selection and writing preferences.

The network 240 communicatively connects the client devices 210, server 220, and data store 230. The network 240 may include, without limitation, one or more local area networks (LANs) and/or wide area networks (WANs). Such networking environments are commonplace in offices, enterprise-wide computer networks, intranets, and the Internet. Accordingly, the network 240 is not further described herein.

The exemplary computing system 200 in which embodiments of the invention are employed is described above. Generally, the computing system 200 illustrates an environment in which digital ink selections are detected based on user input. As will be described in further detail below, embodiments of the invention provide methods and graphical user interface elements for digital ink selection and detecting digital ink selection. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional components that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

Accordingly, a computer device may have computer storage media that may store computer-usable instructions for a computer-implemented method that determines when digital ink user input is a selection as opposed to writing. The computing device may receive digital ink from a user. In turn, the computing device may confirm that the digital ink forms a closed shape. The computing device may update the graphical user interface to show selection of the digital ink within the closed shape based on the user's subsequent action. Additionally, in one embodiment, the computing device may determine whether to convert the closed ink stroke identified as a selection to written ink. Alternatively, the computing device may remove the closed ink stroke based on the user's next interaction (e.g., providing additional ink strokes).

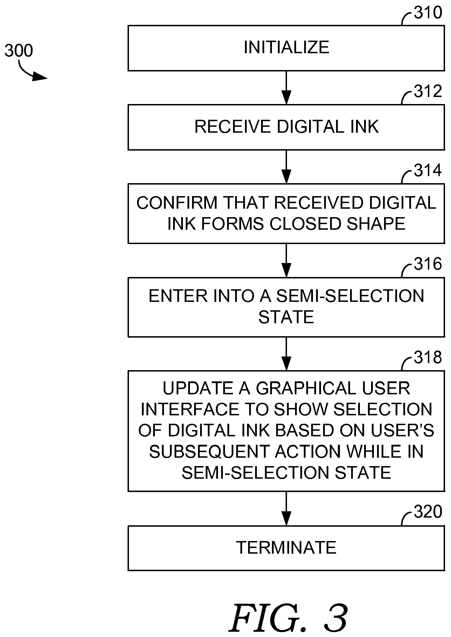

FIG. 3 is a logic diagram illustrating a computer-implemented method of detecting selection of digital ink, in accordance with embodiments of the invention. The method initializes on the computing device in step 310. The computing device, in step 312, receives digital ink on an ink-enabled surface. The computing device, in some embodiments, renders the received digital ink on a graphical user interface.

In step 314, the computing device confirms the received digital ink forms a closed shape. The computing device may determine whether the received digital ink is a closed shape based on whether at least two or more digital ink strokes are connecting or cross each other.

When the received digital ink is not a closed shape, the computing device renders the digital ink. In one embodiment, the received digital ink is rendered on the digital ink-enabled surface. In other embodiments, the received digital ink is rendered on any other display of the computing device.
On the other hand, when the received digital ink is a closed shape, the computing device checks whether the closed shape surrounds other digital ink strokes. Upon detecting ink strokes within the closed shape, in step 316, the computing device enters a semi-selection mode. The semi-selection mode is triggered in response to the digital ink strokes detected in the received closed shape digital ink strokes. The computing device may execute character, word, or shape recognition on the detected digital ink when the detected digital ink strokes are within the received closed shape digital ink. In step 318, the graphical user interface is updated to show selection of the detected digital ink strokes based on subsequent user actions on the computing device displaying the received closed shape digital ink. In an embodiment, the computing device removes the received closed shape digital ink if any actions are taken on the detected digital ink strokes and exits from the semi-selection mode. For instance, the computing device may return to a digital ink writing mode (or touch manipulation mode) from the semi-selection mode.

In some embodiments, subsequent user actions include copying the detected digital ink, moving the detected digital ink, or converting the received digital ink to a written ink. For instance, upon detecting digital ink strokes within the closed shape, the computing device may receive a move command for the detected digital ink strokes. Optionally, the computing device may, in at least one embodiment, display a command box to perform one or more operations on the detected digital ink strokes when the detected digital ink strokes are within the received digital ink closed shape. The computing device may retain the received closed shape digital ink if subsequent user actions are directed to other areas of the digital ink-enabled surface as opposed to the detected digital ink strokes within the closed shape digital ink.

To reduce screen clutter, the computing device may, in other embodiments, remove the closed shape digital ink if additional digital ink strokes are received at the digital ink-enabled surface. Upon removing the closed shape digital ink, the computing device is returned to a digital ink writing mode from the semi-selection mode, and the additional digital ink strokes are rendered on the display of the computing device. In step 320, the method terminates.

When the received digital ink is not a closed shape, the computing device renders the digital ink on the digital ink-enabled surface or any other display of the computing device. In step 320, the method terminates.

Accordingly, the computing device is configured to respond to closed shape digital ink strokes that surround existing digital ink strokes. The response provided by the computing device is dependent on subsequent user action. When the subsequent action is directed to the enclosed digital ink stroke, the closed shape digital ink strokes are processed by the computing device as selection of existing digital ink strokes. When the subsequent action is directed to a display area other than the area displaying the enclosed digital ink strokes, the closed shape digital ink strokes are processed by the computing device as written digital ink. The selection of the existing digital ink strokes is inferred based on the user's next action on the computing device. The user may, among other things, copy, move, edit, etc., the existing digital ink strokes. The selection of the existing digital ink strokes occurs without receiving explicit user input to enter a selection mode. The computing device determines without user input whether the received closed shape digital ink strokes are an inking action or a selection action.

In other embodiments, the computing device may determine selection based on touch gestures received at or near existing digital ink strokes. To initiate selection of existing digital ink strokes, the computing device may receive a tap gesture on the existing digital ink with a touch of the finger (or potentially another input instrument that is not used for inking). The computing device may recognize shapes, sentences, or words that are part of the tapped digital ink. In turn, the computing device applies the selection to a digital ink group associated with the tapped digital ink stroke. The digital ink group may comprise a word, a sentence, or a shape. The selection of the existing digital ink may be rendered as an enclosed shape around the digital ink group. In some embodiments, the size of the selection is modifiable. In other words, the computing device may shrink or expand the digital ink selection. A writing instrument (e.g., pen or stylus) may be used to modify the selection boundaries corresponding to the enclosed shape around the digital ink group.

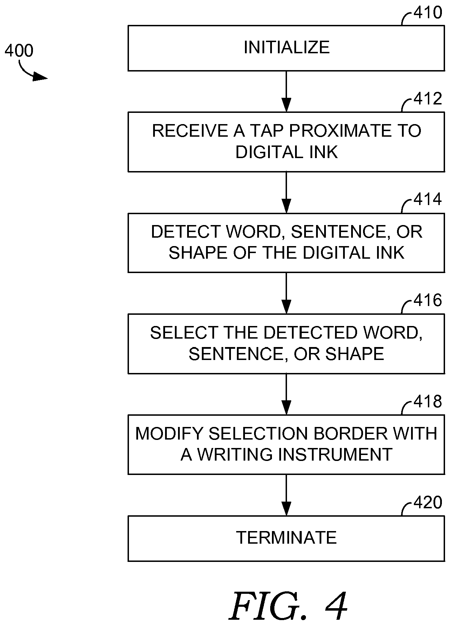

FIG. 4 is another logic diagram illustrating a computer-implemented method of selecting digital ink, in accordance with embodiments of the invention. The computing device initializes the method in step 410. The computing device is configured to switch between a digital ink selection mode and another mode (e.g., touch manipulation mode or digital ink writing mode). The device comprises a processor and a digital ink-enabled surface. The digital ink-enabled surface having sensors to identify tap gestures or writing instrument strokes transmits the identified action to a processor.

The processor is configured to receive the identified actions from the digital ink-enabled surface and to perform the following.

In step 412, the processor receives a tap proximate to existing digital ink. In response to the tap gesture, the processor processes the area associated with the tap to detect digital ink strokes. In step 414, the processor detects a word, sentence, or shape corresponding to the existing digital ink. The processor, in one embodiment, executes a recognition analysis to detect a word, sentence, or shape corresponding to the tapped area. In turn, the processor may enter a digital ink selection mode for the detected digital ink strokes.

In step 416, the processor selects the detected word, sentence, or shape. The processor, in one embodiment, may update the digital ink-enabled surface to render a closed shape around the detected digital ink strokes. In other embodiments, a monitor connected to the device is updated to render the closed shape around the detected digital ink strokes.

In step 418, the selection size is modified by the process in response to a writing instrument or gesture. In one embodiment, the processor receives a writing instrument interaction near the selected digital ink strokes to enlarge the size of the closed shape. Additionally, the processor may receive a writing instrument interaction near the selected digital ink strokes to reduce the size of the closed shape. If the processor receives a writing instrument interaction that is a hover on the border of the closed shape, the processor may initialize management (color, thickness, shape type, etc.) of the closed shape. In some embodiments, the processor receives additional gestures to resize the closed shape. The additional gestures may include a pinch or flick. The pinch may reduce the size of the closed shape. The flick may increase the size of the closed shape.

The processor (in response to the additional writing instrument interactions or additional gestures on another digital ink stroke that is not selected) extends the closed shape to include both the previous selection and the sentence, shape, or word that is part of the other digital ink stroke that is not part of the existing digital ink selections.

Alternatively, the processor (in response to additional writing instrument interactions or additional gestures on another digital ink stroke that is not selected) removes the closed shape from the previous selection and adds the closed shape to the sentence, shape, or word that is part of the other digital ink stroke that is not part of the existing digital ink selections.

In some embodiments, the processor creates new shapes that replace the closed shape. For instance, the processor may receive additional writing instrument interactions or additional gestures away from the selected digital ink. In turn, the processor creates a new shape and removes the current shape enclosing the selected digital ink.

In other embodiments, the processor exits selection mode based on the user action. For instance, the processor may receive additional writing instrument interactions or additional gestures on available whitespace. In response, the processor removes existing digital ink selections and changes to another mode. For instance, the processor may enter a digital ink writing mode or touch manipulation mode from the digital ink selection mode. The additional writing instrument interactions or additional gestures may be rendered as digital ink on the digital ink-enabled surface of a monitor connected to the computing device. In step 420, the method terminates.

Accordingly, a tablet computing device is configured to switch between a digital ink selection mode and another mode (e.g., touch manipulation mode or digital ink writing mode). The tablet includes a processor and a digital ink-enabled surface. The digital ink-enabled surface is configured to identify gestures or writing instrument strokes. The processor is configured to receive the identified gestures or writing instrument strokes from the digital ink-enabled surface and to perform the following: in response to a tap gesture, process the area associated with the tap to detect digital ink strokes, detect a word, sentence, or shape corresponding to the tapped area; enter a selection mode for the located ink strokes; and update the surface to display a closed shape around the located digital ink strokes. The tablet may receive additional writing instrument interactions or additional gestures on another digital ink stroke that is not selected. In turn, the tablet is configured to extend the closed shape to include both the previous selection and the sentence, shape, or word that is part of the other digital ink stroke that is not part of the existing digital ink selections.

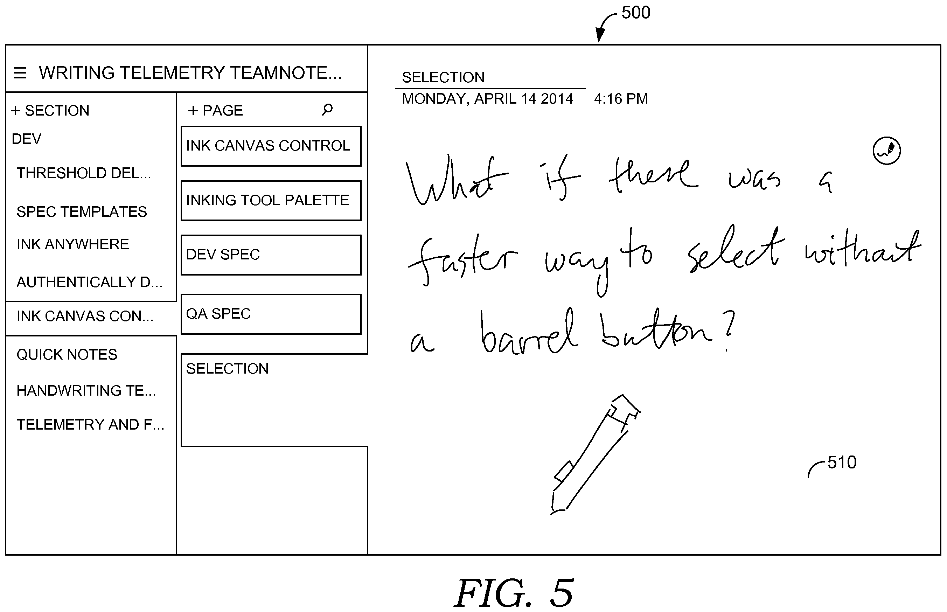

The computing device of the various embodiments generates graphical user interfaces for rendering by the digital ink-enabled surface or by a monitor connected to the computing device. FIGs. 5-9 illustrate exemplary graphical user interfaces that are rendered by the monitor or digital ink-enabled surface in response to interactions received by the computing device.

FIG. 5 is a screenshot illustrating an exemplary graphical user interface 500 for receiving digital ink, in accordance with embodiments of the invention. The graphical user interface 500 is rendered by the computing device. The graphical user interface 500 includes a digital ink receiving area 510. The computing device updates the monitor or digital ink-enabled surface based on the digital ink strokes processed at the computing device.

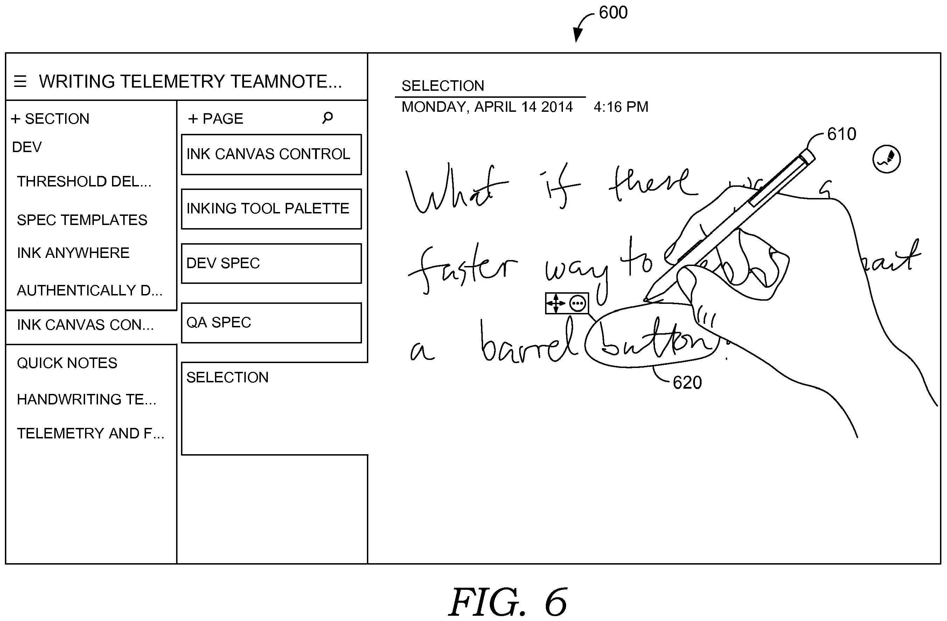

FIG. 6 is a screenshot illustrating another exemplary graphical user interface 600 for selecting the received digital ink, in accordance with embodiments of the invention. The graphical user interface 600 is rendered by the computing device. The graphical user interface 600 is updated with digital ink provided by a writing instrument 610. The computing device updates the monitor or digital ink-enabled surface based on the digital ink strokes provided by the writing instrument 610. In some embodiments, the digital ink strokes received from the writing instrument 610 are processed as a selection action as opposed to writing actions. For instance, if the computing device receives closed shape digital ink strokes 620, the computing device may update the graphical user interface 600 to render the closed shape digital ink stroke. Additionally, the graphical user interface 600 is updated to render a command box for modification of digital ink strokes detected within the closed shape digital ink stroke. The command box and the closed shape digital ink strokes 620 are rendered together on the graphical user interface 600, in at least one embodiment.

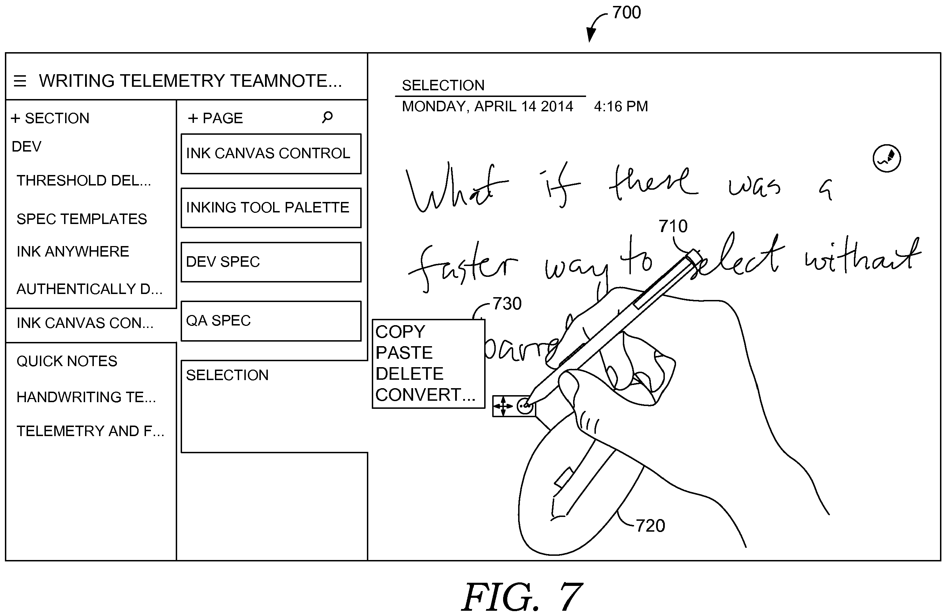

FIG. 7 is a screenshot illustrating an exemplary command box 730 for the selected digital ink, in accordance with embodiments of the invention.

The graphical user interface 700 is rendered by the computing device. The graphical user interface 700 is updated with digital ink provided by a writing instrument 710. The computing device updates the monitor or digital ink-enabled surface based on the digital ink strokes provided by the writing instrument 710. In some embodiments, the digital ink strokes received from the writing instrument 710 are processed as selection of digital ink. For instance, if the computing device receives closed shape digital ink strokes 720, the computing device may update the graphical user interface 700 to render the closed shape digital ink stroke along with a command box 730. The command box 730 may include one or more actions that may be performed on digital ink strokes detected within the closed shape digital ink stroke. The one or more actions for the detected digital ink strokes include copy, delete, move, update color, etc. The command box may, in other embodiments, include one or more actions that may be performed on the closed shape digital ink stroke. The one or more actions for the closed shape digital ink strokes include convert to permanent ink strokes, format color, change size, etc. The command box 730 and the closed shape digital ink strokes 720 are rendered together on the graphical user interface 700, in at least one embodiment. In other embodiments, the command box 730 is rendered by the computing device in response to the writing instrument 710 hovering near the closed shape digital ink strokes 720.

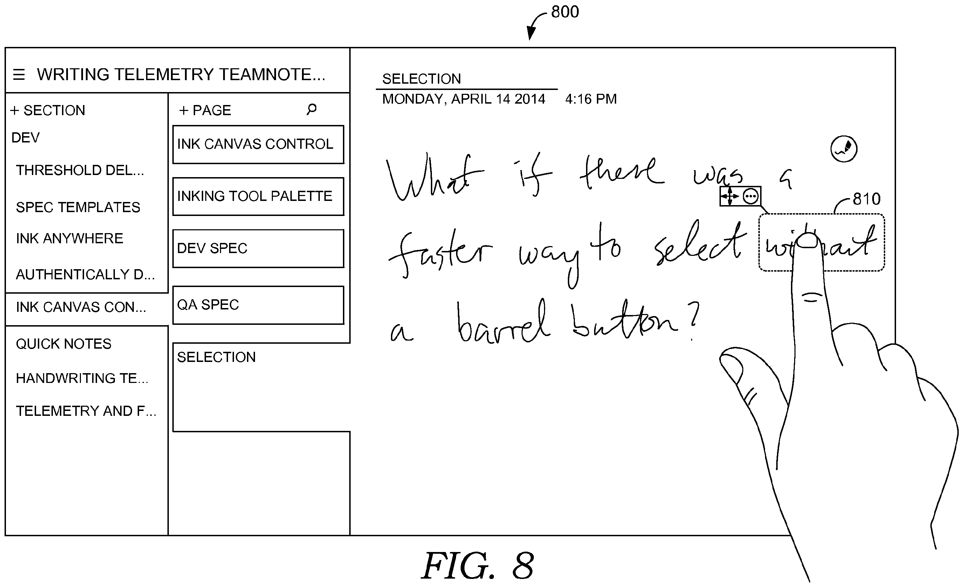

FIG. 8 is a screenshot illustrating an exemplary selection of digital ink, in accordance with embodiments of the invention. A graphical user interface 800 is rendered by the computing device. The graphical user interface 800 includes a digital ink receiving area. The computing device updates the monitor or digital ink-enabled surface based on the digital ink strokes received at the computing device via a writing instrument (e.g., pen or stylus). In certain embodiments, the computing device may receive a gesture from the user. The gesture may be a finger tap, touch, etc. In response to the gesture, the computing device may select digital ink that is near to the area of the digital ink receiving area. The computing device creates a closed shape 810 having selection boundaries around the selected digital ink. The size of the closed shape 810 is modifiable by the user. In at least one embodiment, the closed shape is sized to include a recognized sentence, word, or shape that corresponds to the digital ink near the area receiving the gesture.

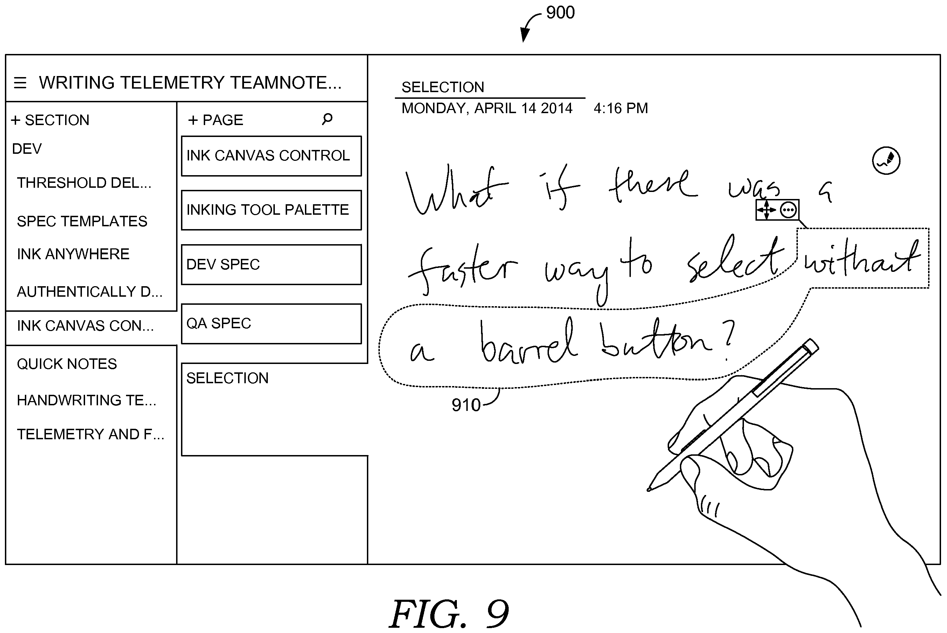

FIG. 9 is a screenshot illustrating an exemplary selection modification for the selected digital ink, in accordance with embodiments of the invention. The computing device updates the monitor or digital ink-enabled surface having the graphical user interface 900. The closed shape 910 has selection boundaries. The computing device may modify the selection based on input received by a writing instrument (e.g., pen or stylus). In certain embodiments, the computing device may receive input to expand the selection by including additional ink strokes that are not currently within the selection boundaries of the closed shape 910. In other embodiments, the computing device may receive input to reduce the selection by removing existing ink strokes that are currently within the selection boundaries of the closed shape 910. Based on the input received via the writing instrument, the computing device updates the monitor or digital ink-enabled surface having the graphical user interface.

In summary, embodiments of the invention provide a computing device that is configured to select digital ink without receiving an express selection command or without relying on a hardware button or the pen or stylus. The computing device may execute the detection processes. In a first process, the computing device may receive a closed shape digital ink stroke around existing digital ink of interest. Upon receiving this type of input from the user, a command box is displayed to allow the user to modify the existing digital ink within the closed shape digital ink. When the user interacts with the command box, the closed shape digital ink stroke is removed by the computing device based on the actions performed. Alternatively, if the user ignores the command box, then the closed shape ink stroke remains for display in the graphical user interface around the existing digital ink.

In a second process, the computing device receives a touch gesture like a tap. In response to receiving a tap on or near a digital ink stroke, the computing device updates the graphical user interface to select the stroke by rendering a closed shape around the group of ink strokes determined to be part of the digital ink stroke that was the target of the gesture. In some embodiments, the computing device renders the closed shape and a command box for performing one or more actions on the digital ink within the closed shape.

Accordingly, embodiments of the invention may be described in the general context of computer-executable instructions, such as program modules, being executed by a computer. Generally, program modules include routines, programs, objects, components, data structures, etc., that perform particular tasks or implement particular abstract data types. The embodiments may also be practiced in distributed computing environments or cloud environments, where tasks are performed by remote-processing devices that are linked through a communications network. In a distributed computing environment, program modules may be located in both local and remote computer storage media including memory storage devices.

In one embodiment, a computer-implemented method for detecting digital ink selection is provided. The method comprises receiving digital ink on an ink-enabled surface of a computing device. The method further comprises determining whether the received digital ink is a closed shape. In turn, the following is performed, when the received digital ink is a closed shape. Ink strokes within the received closed shape digital ink are detected by the computing device. The computing device enters a semi-selection mode in response to the digital ink strokes detected in the received closed shape digital ink. The computer device may select the detected digital ink strokes based on subsequent user actions on the computing device displaying the received closed shape digital ink.

The embodiment of paragraph [0096], further comprising performing the following when the received digital ink is not a closed shape: rendering the received digital ink on the digital ink-enabled surface.

The embodiment of paragraph [0096], wherein detecting digital ink strokes within the received closed shape digital ink further comprises: receiving a move command for the detected digital ink strokes.

The embodiment of paragraph [0096], wherein detecting digital ink strokes within the received closed shape digital ink further comprises: optionally displaying a command box to perform one or more operations on the detected digital ink strokes.

The embodiment of paragraphs [0098] or [0099], wherein detecting digital ink strokes within the received closed shape digital ink further comprises any combination of the following: removing the received closed shape digital ink if additional digital ink strokes are received at the digital ink-enabled surface and exiting from the semi-selection mode (or returning to a digital ink writing mode from the semi-selection mode); keeping the received closed shape digital ink if subsequent user actions are directed to other areas of the digital ink-enabled surface; or executing character and word recognition on the detected digital ink.

In another embodiment a device is configured to switch between a digital ink selection mode and another mode (e.g. touch manipulation mode or digital ink writing mode). The device comprises a digital ink-enable surface and a processor that communicatively connected to each other. The digital ink-enabled surface has sensors to identify tap gestures or writing instrument strokes and transmits the identified action to the processor. In turn, the processor is configured to receive the identified actions from the digital ink-enabled surface and to perform the following. In response to the tap gesture, process the area associated with the tap to detect digital ink strokes. The processor, also, executes a recognition analysis to detect a word, sentence, or shape corresponding to the tapped area. The device enters a digital ink selection mode for the located ink strokes. In other embodiments, the digital ink-enable surface is updated to display a closed shape around the located digital ink strokes.

The embodiment of paragraph [00101], wherein additional writing instrument interactions or additional gestures away from the selected digital ink create a new shape and remove the current shape enclosing the selected digital ink.

The embodiment of paragraph [00102], wherein additional writing instrument interactions or additional gestures on another digital ink stroke that is not selected extends the closed shape to include both the previous selection and the sentence, shape, or word that is part of the other digital ink stroke that is not part of the existing digital ink selections.

The embodiment of paragraph [00101], wherein additional writing instrument interactions or additional gestures on another digital ink stroke that is not selected removes the closed shape from the previous selection and adds the closed shape to the sentence, shape, or word that is part of the other digital ink stroke that is not part of the existing digital ink selections.

The embodiment of paragraph [00101], wherein additional writing instrument interactions or additional gestures on available whitespace removes existing digital ink selections and exits from digital ink selection mode (or returns to the digital ink writing mode from the digital ink selection mode).

The embodiments of paragraphs [00102]-[00105], further comprising: receiving a writing instrument interaction near the selected digital ink strokes to enlarge the size of the closed shape; and receiving a writing instrument interaction near the selected digital ink strokes to reduce the size of the closed shape.

The embodiments of paragraphs [00102]-[00105], wherein the writing instrument interaction is hovering on the border of the closed shape to initialize management of the closed shape.

The embodiments of paragraphs [00102]-[00105], further comprising: receiving additional gestures to resize the closed shape.

The embodiments of paragraphs [00102]-[00105], wherein the additional gestures include a pinch or flick.

The embodiments of paragraph [00108] or [00109], wherein the additional gestures include a tap in an area on the digital ink-enabled surface remote from the closed shape to undo the resize performed on the closed shape.

Moreover, one of ordinary skill in the art can appreciate that there are a variety of ways of making different methods, devices, or computer-readable media that achieve the same result. Aspects of the embodiments of the invention have been described in terms of illustrative embodiments thereof. Numerous other embodiments, modifications, and variations within the scope of the appended claims will occur to persons of ordinary skill in the art from a review of this patent.

## Claims

1. A method comprising:
receiving (312) a first digital ink stroke on a digital ink-enabled surface of a computing device;
determining (314) whether the received first digital ink stroke is a closed shape; and
performing the following, when the received first digital ink stroke is a closed shape:
detecting one or more further digital ink strokes within the received closed shape digital ink stroke;
entering (316) a semi-selection mode in response to the one or more further digital ink strokes detected in the received closed shape digital ink stroke, wherein a computing device displaying the received closed shape digital ink stroke is configured to respond to the closed shape digital ink stroke that surrounds the one or more enclosed digital ink strokes, wherein the response provided by the computing device is dependent on subsequent user action, wherein, when the subsequent action is directed to the one or more enclosed digital ink strokes, the closed shape digital ink stroke is processed by the computing device as selection of the further digital ink strokes, wherein, when the subsequent action is directed to a display area other than the area displaying the one or more enclosed digital ink strokes, the closed shape digital ink stroke is processed by the computing device as written digital ink; and, in case of the selection of the detected one or more enclosed digital ink strokes based on the subsequent user action on the computing device, when one or more tap gestures on another digital ink stroke that is not selected occur, extend the closed shape to include both the previous selection and the sentence, shape, or word containing the other digital ink stroke that is not part of the existing digital ink stroke selections.

2. The method of claim 1, further comprising performing the following when the received first digital ink stroke is not a closed shape: rendering the received digital ink stroke on the digital ink-enabled surface.

3. The method of claim 1, wherein detecting one or more digital ink strokes within the received closed shape digital ink stroke further comprises: receiving a move command for the detected one or more enclosed digital ink strokes.

4. The method of claim 1, wherein detecting one or more digital ink strokes within the received closed shape digital ink stroke further comprises: optionally displaying a command box to perform one or more operations on the detected one or more enclosed digital ink strokes.

5. The method of claims 3 or 4, wherein detecting digital ink strokes within the received closed shape digital ink stroke further comprises:
removing the received closed shape digital ink stroke if additional digital ink strokes are received at the digital ink-enabled surface and returning to a digital ink writing mode from the semi-selection mode;
keeping the received closed shape digital ink stroke if subsequent user actions are directed to other areas of the digital ink-enabled surface; or
executing character and word recognition on the detected one or more enclosed digital ink strokes.

6. Computer-executable instructions that, when executed by a computer, implement the method according to any of the preceding claims.

7. Computer storage media storing the computer-executable instructions according to the preceding claim.

8. A device configured to implement the method according to any one of claims 1 to 5.

## Patentansprüche

1. Verfahren, umfassend:
Empfangen (312) eines ersten digitalen Tintenstrichs auf einer für digitale Tinte geeigneten Oberfläche eines Computergerätes;
Bestimmen (314), ob der empfangene erste digitale Tintenstrich eine geschlossene Form ist; und
Durchführen des folgenden, wenn der empfangene erste digitale Tintenstrich eine geschlossene Form ist:
Detektieren von einem oder mehreren weiteren digitalen Tintenstrichen innerhalb des empfangenen digitalen Tintenstrichs mit geschlossener Form,
Eintreten (316) in einen Semi-Auswahlmodus in Reaktion auf das Detektieren des einen oder der mehreren digitalen Tintenstriche in dem empfangenen digitalen Tintenstrich mit geschlossener Form, wobei ein Computergerät, welches den empfangenen digitalen Tintenstrich mit geschlossener Form anzeigt, konfiguriert ist, auf den digitalen Tintenstrich mit geschlossener Form, der den einen oder die mehreren umschlossenen digitalen Tintenstriche umgibt, zu antworten, wobei die vom Computergerät vorgesehene Antwort von nachfolgender Benutzeraktion abhängt, wobei, wenn die nachfolgende Aktion auf den einen oder die mehreren umschlossenen digitalen Tintenstriche gerichtet ist, der digitale Tintenstrich mit geschlossener Form vom Computergerät als Auswahl der weiteren digitalen Tintenstriche verarbeitet wird, wobei, wenn die nachfolgende Aktion auf einen anderen Anzeigebereich gerichtet ist als der Bereich, der den einen oder die mehreren umschlossenen digitalen Tintenstriche anzeigt, der digitale Tintenstrich mit geschlossener Form vom Computergerät als geschriebene digitale Tinte verarbeitet wird; und,
im Falle der Auswahl des detektierten einen oder der detektierten mehreren umschlossenen digitalen Tintenstriche basierend auf der nachfolgenden Benutzeraktion auf dem Computergerät, wenn eine oder mehrere Antippgesten auf einem anderen digitalen Tintenstrich erfolgen, der nicht ausgewählt ist, Erweitern der geschlossenen Form, um beides zu beinhalten, die vorherige Auswahl und den Satz, die Form, oder das Wort, der, die oder das den anderen digitalen Tintenstrich enthält, der nicht Teil der bestehenden digitalen Tintenstrich-Auswahlen ist.

2. Verfahren nach Anspruch 1, weiterhin umfassend das Durchführen des folgenden wenn der empfangene erste digitale Tintenstrich keine geschlossene Form ist:
Rendern des empfangenen digitalen Tintenstrichs auf der für digitale Tinte geeigneten Oberfläche.

3. Verfahren nach Anspruch 1, wobei das Detektieren von einem oder mehreren digitalen Tintenstrichen innerhalb des empfangenen digitalen Tintenstrichs mit geschlossener Form weiterhin umfasst:
Empfangen eines Verschiebebefehls für die detektierten einen oder mehreren digitalen Tintenstriche.

4. Verfahren nach Anspruch 1, wobei das Detektieren von einem oder mehreren digitalen Tintenstrichen innerhalb des empfangenen digitalen Tintenstrichs mit geschlossener Form weiterhin umfasst:
optional das Anzeigen einer Befehlsbox, um eine oder mehrere Operationen auf dem detektierten einen oder den detektierten mehreren umschlossenen digitalen Tintenstrichen durchzuführen.

5. Verfahren nach Anspruch 3 oder 4, wobei das Detektieren von digitalen Tintenstrichen innerhalb der empfangenen digitalen Tintenstrichs mit geschlossener Form weiterhin umfasst:
Entfernen des empfangenen digitalen Tintenstrichs mit geschlossener Form, wenn zusätzliche digitale Tintenstriche auf der für digitale Tinte geeigneten Oberfläche empfangen werden, und Zurückkehren, vom Semi-Auswahlmodus, in einen digitale-Tinte-Schreibmodus;
Beibehalten des empfangenen digitalen Tintenstrichs mit geschlossener Form, wenn nachfolgende Benutzeraktionen auf andere Bereiche der für digital Tinte geeigneten Oberfläche gerichtet sind; oder
Ausführen von Zeichen- und Worterkennung auf den detektierten einen oder mehreren digitalen Tintenstrichen.

6. Computer-ausführbare Instruktionen, die, wenn sie von einem Computer ausgeführt werden, das Verfahren nach einem der vorhergehenden Ansprüche implementieren.

7. Computerspeichermedien, welche die Computer-ausführbaren Instruktionen gemäß dem vorherigen Anspruch speichern.

8. Gerät, das konfiguriert ist, um das Verfahren nach einem der Ansprüche 1 bis 5 zu implementieren.

## Revendications

1. Procédé comprenant :
la réception (312) d'un premier trait d'encre sur une surface activée pour encre numérique d'un dispositif informatique ;
la détermination (314) si le premier trait d'encre numérique est une forme fermée ;
la réalisation ce qui suit, lorsque le premier trait d'encre numérique reçu est une forme fermée :
la détection d'un ou plusieurs traits d'encre numérique supplémentaires à l'intérieur du trait d'encre numérique de forme fermée ;
l'entrée (316) d'un mode de semi-sélection en réponse à l'un ou plusieurs traits d'encre numérique supplémentaires dans le trait d'encre numérique de forme fermée reçu, un dispositif informatique affichant le trait d'encre numérique de forme fermée reçu étant conçu pour répondre au trait d'encre numérique de forme fermée qui entoure l'un ou plusieurs traits d'encre numérique inclus, la réponse fournie par le dispositif informatique dépendant d'une action d'utilisateur suivante, dans lequel, lorsque l'action suivante est dirigée vers un ou plusieurs traits d'encre numérique inclus, le trait d'encre numérique de forme fermée est traité par le dispositif informatique comme de l'encre numérique écrite ; et, dans le cas d'une sélection de l'un ou plusieurs traits d'encre numérique détectés sur la base de l'action d'utilisateur suivante sur le dispositif informatique lorsqu'un ou plusieurs gestes de tapotement surviennent sur un autre trait d'encre numérique qui n'est pas sélectionné, étendre la forme fermée pour inclure à la fois la sélection précédente et la phrase, la forme ou le mot contenant l'autre trait d'encre numérique qui ne fait pas partie des sélections de traits d'encre numérique existantes.

2. Procédé selon la revendication 1, comprenant en outre la réalisation de ce qui suit lorsque le premier trait d'encre numérique reçu n'est pas de forme fermée :
rendre le trait d'encre numérique reçu sur la surface activée pour l'encre numérique.

3. Procédé selon la revendication 1, dans lequel la détection d'un ou plusieurs traits d'encre numérique à l'intérieur du trait d'encre numérique de forme fermée reçu comprend en outre :
la réception d'une commande de déplacement pour l'un ou plusieurs traits d'encre numérique inclus.

4. Procédé selon la revendication 1, dans lequel la détection d'un ou plusieurs traits d'encre numérique à l'intérieur du trait d'encre numérique de forme fermée reçu comprend en outre :
l'affichage en option d'un boîtier de commande pour exécuter une ou plusieurs opérations sur l'un ou plusieurs traits d'encre numérique inclus détectés.

5. Procédé selon la revendication 3 ou 4, dans lequel la détection d'un ou plusieurs traits d'encre numérique à l'intérieur du trait d'encre numérique de forme fermée reçu comprend en outre :
la suppression du trait d'encre numérique de forme fermée reçu si des traits d'encre numérique supplémentaires sont reçus sur la surface activée pour l'encre numérique et le retour à un mode d'écriture à encre numérique à partir du mode de semi-sélection ;
la conservation du trait d'encre numérique de forme fermée reçu si des actions d'utilisateur suivantes sont dirigées vers d'autres zones de la surface activée pour l'encre numérique ; ou
l'exécution d'une reconnaissance de caractères et de mots sur l'un ou plusieurs traits d'encre numérique inclus détectés.

6. Instructions exécutables par un ordinateur qui, lorsqu'elles sont exécutées par un ordinateur, implémentent le procédé selon l'une des revendications précédentes.

7. Supports de stockage d'ordinateur stockant les instructions exécutables par un ordinateur selon la revendication précédente.

8. Dispositif conçu pour implémenter le procédé selon l'une des revendications 1 à 5.
